# EUROPÄISCHE PATENTSCHRIFT

(11) **EP 3 960 412 B1**
(45) Veröffentlichungstag und Bekanntmachung des Hinweises auf die Patenterteilung: **26.02.2025**
(21) Anmeldenummer: 21191426.2
(22) Anmeldetag: 16.08.2021
(51) Int. Cl.: B29B 17/00, B29B 17/04, B29K 27/06

(54) **VERFAHREN ZUR HERSTELLUNG RECYCELTER MATTEN AUS PVC-KUNSTLEDERRANDBESCHNITT**
PROCESS FOR THE PRODUCTION OF RECYCLED MATS FROM PVC ARTIFICIAL LEATHER TRIMS
PROCÉDÉ DE FABRICATION DE NATTES RECYCLÉES À PARTIR DE DÉCOUPES DE BANDES EN SIMILICUIR PVC

(30) Priorität: 27.08.2020 DE 102020210850
(43) Veröffentlichungstag der Anmeldung: 02.03.2022
(73) Patentinhaber: Benecke-Kaliko AG, 30419 Hannover (DE)
(72) Erfinder: Reinholz, Simon, 30419 Hannover (DE)
(74) Vertreter: Continental Corporation

(56) Entgegenhaltungen:
- CN-A- 102 950 669
- CN-A- 85 107 745
- CN-U- 206 899 358
- JP-A- H0 631 732
- EU-R: "Recycling von Kunstleder-Abfällen zu Reitplatzmatten - EU-Recycling", 28 July 2017 (2017-07-28), pages 1 - 2, XP055876765, Retrieved from the Internet <URL:https://eu-recycling.com/Archive/16740> [retrieved on 20220107]
- ANONYMOUS: "Recycling von Kunstleder-Abfällen zu Reitplatzmatten - RECYCLING magazin", 23 June 2017 (2017-06-23), pages 1 - 2, XP055876774, Retrieved from the Internet <URL:https://www.recyclingmagazin.de/2017/06/23/recycling-von-kunstleder-abfaellen-zu-reitplatzmatten/> [retrieved on 20220107]
- LIJIMA R: "CURRENT SITUATION OF WASTE PLASTICS RECYCLING TECHNOLOGIES AND THEIR PROSPECTS", ENGINEERING PLASTICS, 11988 1, vol. 3, no. 5, 1 January 1990 (1990-01-01), pages 332 - 350, XP000207901, ISSN: 0952-6900

## Beschreibung

Die vorliegende Erfindung betrifft ein Verfahren zur Herstellung recycelter Artikel aus Produktionsabfall umfassend PVC-Kunstlederrandbeschnitt.

Matten werden schon heute teilweise aus Produktionsabfällen, wie z.B. PVC-Kunstleder-Abfällen, hergestellt. Die Produktionsabfälle werden dafür geschreddert bzw. zerkleinert, extrudiert und zuletzt in eine beliebige Form gepresst. Die Herstellung der recycelten Matten erfolgt dabei in spezialisierten Recyclingunternehmen.

Die Nachteile bestehen darin, dass
- die Hersteller von recycelten Matten den Rohstoff (Produktionsabfälle) in der Regel von diversen Quellen beziehen, was zu hohen Transportkosten und CO₂-Emmissionen führt,
- aufgrund von verschiedenen Quellen keine Garantien für Inhaltsstoffe gegeben werden,
- nicht nach einer Rezeptur mit gleichbleibender Qualität gefertigt wird,
- keine Materialien hinzugegeben werden, die die Eigenschaften der Matte gezielt verändern/verbessern,
- die Produktionsstätte häufig wenig automatisiert sind und die vielen verschiedenen Arbeitsvorgänge die Produktion sehr aufwendig machen.

In CN85107745A wird ein Verfahren zur Herstellung von recycelten Artikeln aus Kunstlederabfall gezeigt, wobei der Kunstlederabfall zerkleinert, erwärmt und formgepresst wird. Die JPH0631732A offenbart ein Verfahren zur Herstellung von recycelten Artikeln aus PVC-Kunstlederabfall. Die CN206899358U offenbart eine Abfallverwertungsanlage die automatisch das Schneiden und anschließende Recyclen von PVC ausführt.

Die Aufgabe der Erfindung bestand darin, die vorstehenden Nachteile des Stands der Technik zu überwinden und insbesondere ein Verfahren zum Recycling für Produktionsabfälle aus PVC-Kunstlederrandbeschnitt bereitzustellen, mit dem Transportkosten verringert und die Kontrolle über die Qualität und Inhaltsstoffe der erhaltenen recycelten Artikel verbessert wird. Des Weiteren sollte die Möglichkeit bestehen, die Eigenschaften der Artikel besser kontrollieren und weiterentwickeln zu können.

Die Aufgabe wurde dadurch gelöst, dass die Fertigung der recycelten Artikel mit der Entstehung des Produktionsabfalls dergestalt gekoppelt wurde, dass der Hersteller des PVC-Kunstleders, bei dem der im Recyclingverfahren eingesetzte PVC-Kunstlederrandbeschnitt anfällt, auch das Recyclingverfahren selbst durchführt. Dementsprechend betrifft die Erfindung ein Verfahren zur Herstellung recycelter Artikel aus Produktionsabfall, umfassend PVC-Kunstlederrandbeschnitt, wobei der Produktionsabfall zerkleinert, erwärmt und formgepresst wird, um den recycelten Artikel zu erhalten, wobei das Verfahren zur Herstellung des recycelten Artikels von dem Hersteller des PVC-Kunstleders durchgeführt wird, von dem die PVC-Kunstlederrandbeschnitte stammen, wobei der PVC-Kunstlederrandbeschnitt mindestens 80 Gew.-% des Produktionsabfalls ausmacht.

Durch die Erfindung werden neben der Einsparung von Transportkosten, Reduzierung der CO₂-Emissionen und der Verbesserung der Abfallbilanz, zudem nachhaltige Produkte produziert, die an die Bedürfnisse der Kunden individuell angepasst werden können. Durch die Erfindung wird die Fertigung der recycelten Artikel, insbesondere von Matten, von dem Hersteller der PVC-Kunstleders, von dem die PVC-Kunstlederrandabschnitte als Produktionsabfall anfallen, selbst an einem seiner Standorte durchgeführt.

Da der Hersteller naturgemäß eine genaue Kenntnis über die Inhaltsstoffe des Produktionsabfalls besitzt, ist es möglich, eine Garantie über die Inhaltsstoffe des recycelten Artikels zu geben. Bezüglich der Inhaltsstoffe können zum Beispiel schädliche bzw. nicht REACH-zertifizierte Stoffe ausgeschlossen werden. Eine solche Garantie kann von einem üblichen Recyclingunternehmen gewöhnlich nicht gegeben werden, wäre für die Abnehmer von recycelten Artikeln aber oft von großem Vorteil. Auch kann eine gleichbleibende Produktqualität gewährleistet werden, da eine sichere Kontrolle der Ausgangsmaterialien möglich ist.

Ferner ist eine weitere gezielte Weiterentwicklung der recycelten Artikel, wie z.B. von Matten, auf Basis der genauen Kenntnis der Inhaltsstoffe möglich.

Bei dem Verfahren zur Herstellung recycelter Artikel aus Produktionsabfall handelt es sich um ein Recyclingverfahren, bei dem der eingesetzte Produktionsabfall PVC-Kunstlederrandbeschnitt umfasst oder daraus besteht. PVC-Kunstlederrandbeschnitt ist ein Produktionsabfall, der bei der Herstellung von PVC-Kunstleder und/oder dessen Weiterverarbeitung entsteht.

PVC-Kunstleder ist in der Regel ein Verbund aus einem textilen Grundträger und einer Kunststoffdeckschicht, die aus PVC (Polyvinylchlorid) gebildet ist. Der textile Grundträger kann ein Gewebe sein, z.B. ein Naturfasergewebe, Chemiefasergewebe oder Mischgewebe. Der textile Grundträger kann zusätzlich mit Kunststoff wie Weich-PVC beschichtet sein, wobei die Beschichtung kompakt oder geschäumt ausgeführt sein kann. Die Deckschichtoberfläche kann für die Optik mit einer Narbenprägung versehen sein. PVC-Kunstleder wird z.B. als Material für Bekleidungsstücke, Schuhe, Automobilverkleidung, Sitzbezüge oder Möbel verwendet. PVC-Kunstlederrandbeschnitte entstehen als Produktionsabfall bei der Herstellung von PVC-Kunstleder und/oder beim Zuschneiden des PVC-Kunstleders in die für die jeweilige Anwendung gewünschte Form. Bei diesem Zuschneiden ist die Entstehung von Randbeschnitten meist unvermeidlich. Das Verfahren zur Herstellung des recycelten Artikels aus dem Produktionsabfall, umfassend PVC-Kunstlederrandbeschnitte, wird dabei von dem Hersteller durchgeführt, der auch das PVC-Kunstleder herstellt, von dem die PVC-Kunstlederrandbeschnitte während der Produktion und/oder der Weiterverarbeitung anfallen.

Der Produktionsabfall zur Herstellung der recycelten Artikel umfasst PVC-Kunstlederrandbeschnitt oder besteht daraus. Neben dem PVC-Kunstlederrandbeschnitt kann der Produktionsabfall weitere kunststoffhaltige Abfälle enthalten. Es ist aber bevorzugt, dass der größte Teil des Produktionsabfalls aus PVC-Kunstlederrandbeschnitt gebildet ist.

In einer bevorzugten Ausführungsform macht der PVC-Kunstlederrandbeschnitt mindestens 90 Gew. %, bevorzugt mindestens 95 Gew.-% des Produktionsabfalls aus. Besonders bevorzugt besteht der Produktionsabfall aus PVC-Kunstlederrandbeschnitt oder besteht zumindest im Wesentlichen aus PVC-Kunstlederrandbeschnitt, d.h. mindestens 99 Gew.-% oder 100 Gew.-% des Produktionsabfalls sind aus PVC-Kunstlederrandbeschnitt. Additive, die dem Produktionsabfall gegebenenfalls zugemischt werden, fallen dabei nicht unter dem Produktionsabfall und sind dementsprechend bei den obigen Mengenangaben nicht berücksichtigt. Der restliche Anteil des Produktionsabfalls, falls vorhanden, kann von anderen Kunststoff-haltigen Abfällen, insbesondere Gummiabfall, gebildet sein.

Der als Produktionsabfall eingesetzte PVC-Kunstlederrandbeschnitt kann von einem Werk des Herstellers stammen oder eine Mischung von Produktionsabfällen verschiedener Werke des Herstellers sein. Dies gilt für Produktionsabfall, die den PVC-Kunstlederrandbeschnitt umfassen oder daraus bestehen bzw. im Wesentlichen daraus bestehen.

Neben dem PVC-Kunstlederrandbeschnitt können als Produktionsabfall gegebenenfalls auch andere Abfallstoffe beigemischt werden, wie z.B. Gummiabfall. Gummiabfall stellt einen vulkanisierten Produktionsabfall dar. Gummiabfall kann z.B. von gebrauchten Reifen, z.B. Altreifen, Förderbändern oder Riemen stammen, oder bei der Herstellung dieser Produkte anfallen. Damit ergibt sich auch für einen weiteren Produktionsabfall, der aktuell i.d.R. in die Verbrennung oder auf eine Deponie geht, eine nachhaltige Lösung.

Der neben dem PVC-Kunstlederrandbeschnitt im Produktionsrandbeschnitt enthaltene Produktionsabfall, insbesondere Gummiabfall, ist aber, wenn überhaupt, in der Regel nur in relativ geringen Mengen, z.B. unter 20 Gew.-%, bevorzugt unter 10 Gew.-%, des Produktionsabfalls enthalten. Der Produktionsabfall besteht bevorzugt oder besteht im Wesentlichen bevorzugt aus PVC-Kunstlederrandbeschnitt oder aus PVC-Kunstlederrandbeschnitt und Gummiabfall. Der Gummiabfall kann in dem gebildeten recycelten Artikel als Füllstoff fungieren, wobei der PVC-Kunstlederrandbeschnitt das Matrixmaterial bildet.

Der Gummiabfall wird, falls eingesetzt, ebenfalls in zerkleinerter Form eingesetzt. Es wird insbesondere ein vermahlener Gummiabfall eingesetzt. Der vermahlene Gummiabfall kann z.B. eine gewichtsmittlere Teilchengröße von 0,5 mm bis 3 mm, bevorzugt 1 mm bis 2 mm aufweisen. Bei Einsatz von Gummiabfall ist es bevorzugt, dass auch der Hersteller des Gummiprodukts, von dem der Gummiabfall stammt, das erfindungsgemäße Recyclingverfahren durchführt.

In einer weiteren bevorzugten Ausführungsform können dem Produktionsabfall ein oder mehrere Additive zugesetzt werden. Das oder die Additive können z.B. Flammschutzmittel, farbgebende Mittel und/oder Weichmacher sein. Als farbgebende Mittel können Farben oder Pigmente eingesetzt werden. Durch den Zusatz von einem oder mehreren Additiven ist eine gezielte Weiterentwicklung der recycelten Artikel, wie z.B. Matten, möglich. Auf diese Weise können gewünschte Eigenschaften der Artikel durch Zugabe von Additiven eingestellt werden, was die genaue Kenntnis des Ausgangsmaterials voraussetzt.

Das Verfahren zur Herstellung des recycelten Artikels wird an einem Standort durchgeführt, zu dem die PVC-Kunstlederrandbeschnitte verbracht werden, die in einem Werk oder mehreren Werken des Herstellers als Produktionsabfall anfallen. Auf diese Weise werden die Transportkosten minimiert und die Kontrolle über die Ausgangsmaterialien maximiert.

Das Verfahren zur Herstellung des recycelten Artikels umfasst die im Stand der Technik bekannten Schritte. Zunächst werden die Produktionsabfälle zerkleinert, das zerkleinerte Material wird erwärmt und formgepresst, um die gewünschte Form des recycelten Artikels zu erhalten.

Die Zerkleinerung des Produktionsabfalls kann z.B. in Schreddern, Mühlen oder Mahlanlagen erfolgen. Die zweckmäßige Korngröße des zerkleinerten Produktionsabfalls kann je nach Anwendung variieren. Die Korngröße des zerkleinerten Produktionsabfalls kann beispielsweise kleiner 5 cm, bevorzugt kleiner 1 cm sein, z.B. im von 0,5 cm bis 5 cm, bevorzugt von 0,5 cm bis 1 cm. Die Korngröße kann sich auf das Gewichtsmittel beziehen und mittels Siebanalyse bestimmt werden. Beim Schreddern des Materials speziell vom Textil kommt es zu einer "Flusenbildung", für die es schwer ist, eine Korngröße festzulegen. Die Flusen werden für die Bestimmung der Korngröße daher nicht berücksichtigt.

Die Erwärmung des zerkleinerten Produktionsabfalls wird bevorzugt in einem Extruder durchgeführt, d.h. der zerkleinerte Produktionsabfall wird bevorzugt extrudiert. Der zerkleinerte Produktionsabfall wird vorzugsweise auf eine hohe Temperatur erwärmt bzw. extrudiert, z.B. im Bereich von 140 °C bis 200 °C, bevorzugt 165 bis 185 °C. Auf diese Weise wird eine relativ dünnflüssige Masse bzw. Schmelze erhalten.

Der erwärmte Produktionsabfall wird dann in die gewünschte Form gepresst. Es können alle üblichen Formpressvorrichtungen eingesetzt werden. Der Zyklus aus Erwärmen und Pressen kann gegebenenfalls ein- oder mehrmals wiederholt werden.

Ein oder mehrere Additive können dem Produktionsabfall zu jedem beliebigen Zeitpunkt während der Herstellung des recycelten Artikels zugesetzt werden, z.B. vor, während und/oder nach der Zerkleinerung und/oder vor, während oder nach der Erwärmung.

Es können beliebige recycelte Artikel hergestellt werden, insbesondere Matten oder Platten. Bei Bedarf können sie durch Einsatz von einem oder mehreren Additiven mit speziellen Eigenschaften ausgestattet werden. Die Artikel können die verschiedensten Formen und Farben annehmen.

Beispiele für herstellbare recycelte Artikel sind Matten, Platten, Reitplatzmatten, Bauzaunfüße, Bakenfüße, Bautenschutzmatten, Baumatten und Bahnschwellen.

Der hergestellte recycelte Artikel ist bevorzugt eine Matte, insbesondere eine Reitplatzmatte

Reitplatzmatten sind Matten, die z.B. dazu dienen, Pferden einen trittsicheren Boden zu bieten. Reitplatzmatten werden in der Regel zwischen einem Unterbau und einer Tretschicht für Pferde eingesetzt. Die Tretschicht kann Sand und gegebenenfalls Zuschlagstoffe umfassen.

Ein Aspekt, der nicht Teil der vorliegenden Erfindung ist, betrifft ferner einen recycelten Artikel, der nach dem vorstehend beschriebenen erfindungsgemäßen Verfahren erhältlich ist. Der recycelte Artikel ist bevorzugt eine Matte, insbesondere ein Reitplatzmatte.

Ein weiterer Aspekt, der nicht Teil der vorliegenden Erfindung ist, betrifft ferner die Verwendung des nach dem vorstehend beschriebenen erfindungsgemäßen Verfahren erhältlichen recycelten Artikels als Reitplatzmatte.

## Patentansprüche

1. Verfahren zur Herstellung recycelter Artikel aus Produktionsabfall, umfassend PVC-Kunstlederrandbeschnitt, wobei der Produktionsabfall zerkleinert, erwärmt und formgepresst wird, um den recycelten Artikel zu erhalten, wobei das Verfahren zur Herstellung des recycelten Artikels von dem Hersteller des PVC-Kunstleders durchgeführt wird, von dem die PVC-Kunstlederrandbeschnitte stammen, wobei der PVC-Kunstlederrandbeschnitt mindestens 80 Gew.-% des Produktionsabfalls ausmacht.

2. Verfahren nach Anspruch 1, **dadurch gekennzeichnet, dass** der PVC-Kunstlederrandbeschnitt mindestens 90 Gew.-%, bevorzugt mindestens 99 Gew.-% des Produktionsabfalls ausmacht.

3. Verfahren nach einem der vorhergehenden Ansprüche,
**dadurch gekennzeichnet, dass** der Produktionsabfall ferner Gummiabfall umfasst.

4. Verfahren nach einem der vorhergehenden Ansprüche,
**dadurch gekennzeichnet, dass** dem Produktionsabfall ein oder mehrere Additive zugesetzt werden, wobei das oder die Additive bevorzugt ausgewählt sind aus Flammschutzmittel, farbgebendem Mittel oder Weichmacher.

5. Verfahren nach einem der vorhergehenden Ansprüche,
**dadurch gekennzeichnet, dass** die PVC-Kunstlederrandbeschnitte in einem oder mehreren Werken des Herstellers als Produktionsabfall anfallen.

6. Verfahren nach einem der vorhergehenden Ansprüche,
**dadurch gekennzeichnet, dass** die Erwärmung des zerkleinerten Produktionsabfalls in einem Extruder durchgeführt wird.

7. Verfahren nach einem der vorhergehenden Ansprüche,
**dadurch gekennzeichnet, dass** der zerkleinerte Produktionsabfall auf eine Temperatur im Bereich von 140 °C bis 200 °C, bevorzugt 165 bis 185 °C, erwärmt wird.

8. Verfahren nach einem der vorhergehenden Ansprüche,
**dadurch gekennzeichnet, dass** der recycelte Artikel eine Matte, bevorzugt ein Reitplatzmatte, ist.

## Claims

1. Process for producing recycled articles from production waste comprising PVC synthetic leather edge trimmings, wherein the production waste is comminuted, heated and compression-moulded to give the recycled article, wherein the process for producing the recycled article is performed by the manufacturer of the PVC synthetic leather from which the PVC synthetic leather edge trimmings originate, wherein the PVC synthetic leather edge trimmings make up at least 80% by weight of the production waste.

2. Process according to Claim 1, **characterized in that** the PVC synthetic leather edge trimmings represent at least 90% by weight, preferably at least 99% by weight of the production waste.

3. Process according to either of the preceding claims,
**characterized in that** the production waste further comprises rubber waste.

4. Process according to any of the preceding claims,
**characterized in that** one or more additives are added to the production waste, wherein the additive or additives are preferably selected from flame retardant, colourant or plasticizer.

5. Process according to any of the preceding claims,
**characterized in that** the PVC synthetic leather edge trimmings are obtained as production waste in one or more of the manufacturer's plants.

6. Process according to any of the preceding claims,
**characterized in that** the heating of the comminuted production waste is carried out in an extruder.

7. Process according to any of the preceding claims,
**characterized in that** the comminuted production waste is heated to a temperature in the range from 140°C to 200°C, preferably 165 to 185°C.

8. Process according to any of the preceding claims,
**characterized in that** the recycled article is a mat, preferably a riding arena mat.

## Revendications

1. Procédé de fabrication d'articles recyclés à partir de déchets de production, comprenant des rognures de bordures de cuir synthétique en PVC, les déchets de production étant broyés, chauffés et moulés par compression pour obtenir l'article recyclé, le procédé de fabrication de l'article recyclé étant mis en œuvre par le fabricant du cuir synthétique en PVC dont proviennent les rognures de bordures de cuir synthétique en PVC, les rognures de bordures de cuir synthétique en PVC représentant au moins 80 % en poids des déchets de production.

2. Procédé selon la revendication 1, **caractérisé en ce que** les rognures de bordures de cuir synthétique en PVC représentent au moins 90 % en poids, de préférence au moins 99 % en poids, des déchets de production.

3. Procédé selon l'une quelconque des revendications précédentes, **caractérisé en ce que** les déchets de production comprennent en outre des déchets de caoutchouc.

4. Procédé selon l'une quelconque des revendications précédentes,
**caractérisé en ce qu'**un ou plusieurs additifs sont ajoutés aux déchets de production, le ou les additifs étant de préférence choisis parmi un agent ignifugeant, un colorant ou un plastifiant.

5. Procédé selon l'une quelconque des revendications précédentes,
**caractérisé en ce que** les rognures de bordures de cuir synthétique en PVC sont générées en tant que déchets de production dans une ou plusieurs usines du fabricant.

6. Procédé selon l'une quelconque des revendications précédentes,
**caractérisé en ce que** le chauffage des déchets de production broyés est effectué dans une extrudeuse.

7. Procédé selon l'une quelconque des revendications précédentes, **caractérisé en ce que** les déchets de production broyés sont chauffés à une température dans la plage de 140 °C à 200 °C, de préférence de 165 à 185 °C.

8. Procédé selon l'une quelconque des revendications précédentes, **caractérisé en ce que** l'article recyclé est un tapis, de préférence un tapis de manège.
